# EUROPÄISCHE PATENTSCHRIFT

(11) **EP 0 410 193 B1**
(45) Veröffentlichungstag und Bekanntmachung des Hinweises auf die Patenterteilung: **06.10.1993**
(21) Anmeldenummer: 90113035.1
(22) Anmeldetag: 07.07.1990
(51) Int. Cl.: B60R 11/02

(54) **Codegeschütztes Autoradio**
Operation prohibition code for a car radio
Autoradio protégé par code

(30) Priorität: 27.07.1989 DE 3924896
(43) Veröffentlichungstag der Anmeldung: 30.01.1991
(73) Patentinhaber: Blaupunkt-Werke GmbH, 31132 Hildesheim (DE)
(72) Erfinder: Lauke, Volker, D-3200 Hildesheim (DE); Liman, Helmut, D-3204 Nordstemmen (DE); Schröder, Karl-Heinz, D-3204 Nordstemmen (DE)
(74) Vertreter: Eilers, Norbert, Dipl.-Phys.

(56) Entgegenhaltungen:
- EP-A- 0 145 405
- GB-A- 2 104 696
- US-A- 4 604 708

## Beschreibung

Gegenstand des Schutzrechts ist ein neues, codegeschütztes Autoradio.

Autoradios entsprechend den Merkmalen des Oberbegriffs des Anspruchs 1 sind heute handelsüblich. Wenn der Eigentümer eines solchen codegeschützten Gerätes, dessen Code er selbst hat wählen können und in das Autoradio eingegeben hat, den Code vergessen hat, dann ist es bei den auf dem Markt befindlichen Geräten nicht möglich, das Autoradio nach einer Trennung vom Bordnetz wieder spielfähig zu machen, sofern man nicht den Codespeicher mit dem vom Benutzer eingegebenen Code vom Kundendienst des Herstellers durch einen jungfräulichen Codespeicher ersetzen läßt. Dieser Wechsel stellt einen erheblichen Aufwand dar.

Bei Autoradios, in die ein werkseitig festgelegter Code einzugeben ist, können in diesem Fall durch eine in der US-Patentschrift 46 04 708 festgelegten Maßnahme wieder spielfähig gemacht werden. Diese Lösung geht im Prinzip davon aus, daß der Benutzer bei dem Kundendienst des Herstellers den werkseitig festgelegten Code erneut abfragen kann.

Da aber bei dem Gegenstand des Schutzrechts nur der Eigentümer selbst den Code kennt, ist diese Abfrage nicht möglich.

Die Erfindung löst die gestellte Aufgabe, codegeschützte Autoradios mit den Merkmalen des Oberbegriffs des Anspruchs 1 mit geringem Aufwand wieder spielfähig zu machen, mit Hilfe der im kennzeichnenden Teil des Anspruchs 1 aufgeführten Mittel.

Die Erfindung wird im folgenden anhand einer Zeichnung näher erläutert, die in
Figur 1 ein Blockschaltbild eines bekannten codegeschützten Autoradios, im
Figur 2 die erfindungsgemäße Erweiterung der bekannten Schaltung zeigt.

Ein bekanntes codegeschütztes Autoradio empfängt über die Antenne 1 den modulierten Träger des im Tuner 2 eingestellten Senders. In der ZF-Stufe 3 wird die Modulation auf die Zwischenfrequenz umgesetzt, diese verstärkt und die Modulation sodann vom ZF-Träger getrennt. Die Modulation selbst wird schließlich in der NF-Stufe 4 weiter verstärkt und über den Lautsprecher 5 zu Gehör gebracht.

Alle Stufen, Tuner 2, ZF-Stufe 3 und NF-Stufe 4 bedürfen der Energieversorgung aus dem Bordnetz des Autos. Dazu sind die einzelnen Stufen über ein Netzteil 6 mit der Autobatterie 7 verbunden. Im Netzteil 6 ist eine Schaltungsanordnung 14 enthalten, welche die Funktion einer der Stufen, z. B. durch Unterbrechung der Energieversorgung, unterbindet, wenn das Autoradio einmal vom Bordnetz getrennt worden ist. Solche Trennungen sind beim normalen Betrieb nicht sehr häufig, aber bei Batteriewechsel oder dergleichen nicht zu vermeiden.

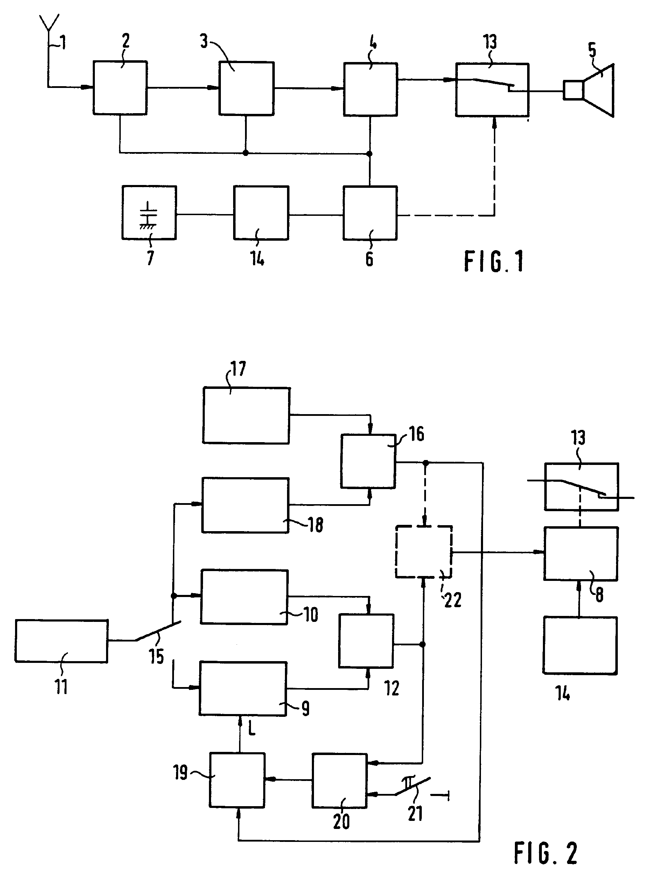

Die Schaltungsanordnung ist in Figur 2 differenzierter dargestellt. Sie umfaßt einen Mikroprozessor 8, einen Codespeicher 9, einen ersten Zwischenspeicher 10 und eine Eingabetastatur 11. Ferner eine erste Vergleichsstufe 12, einen Funktionsschalter 13 sowie einen Sensor 14, der eine Trennung des Autoradios von der Autobatterie 7 registriert.

Bei einer solchen Trennung wird der Funktionsschalter 13 über den Mikroprozessor 8 geöffnet und unterbindet dadurch eine wesentliche, gegebenenfalls vom Mikroprozessor gesteuerte Gerätefunktion im Ausführungsbeispiel die Verbindung zum Lautsprecher 5. Der Funktionsschalter 13 fällt nur in seine Ruhestellung, in der er geschlossen ist, zurück, wenn die erste Vergleichsstufe 12 die Übereinstimmung des in dem Codespeicher 9 abgelegten Codes mit dem in dem Zwischenspeicher 10 über die Eingabetastatur 11 eingegebenen Code übereinstimmt. Die Belegung des Codespeichers 9 mit dem vom Eigentümer frei gewählten Code erfolgt ebenfalls über die Eingabetastatur 11, die in einem Codeeingabe-Betriebsmodus des Mikroprozessors 8 über einen Umschalter 15 mit dem Codespeicher anstatt mit dem ersten Zwischenspeicher 10 verbunden ist.

Hat der Eigentümer den von ihm früher gewählten und in den Codespeicher eingegebenen Code vergessen, dann kann er nach einer Trennung des Autoradios von der Autobatterie 7 den Funktionsschalter 13 nicht wieder in die Ruhestellung bringen.

Hier hilft nun die erfindungsgemäße Weiterbildung des bekannten Autoradios. Der Codespeicher 9 ist mit einem Löscheingang L ausgerüstet. An diesem Löscheingang L ist der Ausgang einer zweiten Vergleichsstufe 16 angeschlossen, die den Inhalt eines Festspeichers 17 mit dem Inhalt eines zweiten Zwischenspeichers 18 vergleicht. Der Code im Festspeicher 17 ist werkseitig eingegeben und kann danach nicht mehr verändert werden.

Wird nun der werkseitig festgelegte zweite Code über die Eingabetastatur 11 in den zweiten Zwischenspeicher 18 eingegeben, der ständig parallel zum Eingang des ersten Zwischenspeichers 10 liegen kann, dann wird der Löscheingang des Codespeichers 9 aktiviert und sein Inhalt gelöscht. Danach kann der Eigentümer wieder einen Code in den Codespeicher 9 eingeben und danach nochmals in den ersten Zwischenspeicher 10, wodurch der Funktionsschalter 13 in eine Ruhestellung zurückgesteuert wird.

Der zweite Code wird dem Eigentümer auf Anfrage und nach gehörigem Nachweis der Eigentumsverhältnisse vom Kundendienst des Herstellers mitgeteilt.

In einer Variante des bisher beschriebenen Ausführungsbeispiels der Erfindung, die in Figur 2 mit gezeigt ist, ist eine zweite Möglichkeit zur Löschung des Codespeichers 9 vorgesehen. Dazu ist zwischen dem Löscheingang L des Codespeichers 9 und dem Ausgang der zweiten Vergleichsstufe 16 eine Oderschaltung 19 zwischengeschaltet. An deren erstem Eingang liegt die erwähnte zweite Vergleichsstufe 16, an deren anderem Eingang der Ausgang einer Undschaltung 20. Der eine Eingang der Undschaltung 20 ist mit einer Löschtaste 21 in der Autoradiofront und der zweite Eingang mit dem Ausgang der ersten Vergleichsstufe 12 verbunden, die ein Ausgangssignal liefert, wenn über die Eingabetastatur der frei gewählte Code eingegeben ist.

Es liegt im Rahmen der Erfindung, wenn der Steuereingang des Mikroprozessors 8 für den Funktionsschalter 13 über eine Oderschaltung 22 mit dem Ausgang der zweiten Vergleichsstufe 16 verbunden ist. Diese Schaltung bewirkt, daß beim Löschen des Codespeichers 9 durch Eingabe des werkseitig festgelegten Codes auch die Unterbrechnung der Gerätefunktion durch den Funktionsschalter 13 aufgehoben wird.

Durch die erfindungsgemäße Weiterbildung des bekannten Autoradios wird das lästige Einsenden des Autoradios und der Ausbau des Codespeichers durch den Kundendienst des Herstellers eingespart und doch die Freiheit erhalten, daß der Eigentümer sich den Schutzcode selbst wählen kann.

Die einzelnen Schaltzustände des Autoradios im Verlauf des Arbeitsprogramms des Mikroprozessors sind hier nur so weit erwähnt, wie es für das Verständnis der Erfindung erforderlich ist. Eine Beschränkung der Erfindung auf das dargestellte Ausführungsbeispiel ist nicht beabsichtigt.

## Patentansprüche

1. Codegeschütztes Autoradio mit einer Schaltungsanordnung zur Unterbrechung der Gerätefunktion nach der Trennung vom Bordnetz, die erst nach Eingabe eines in einem Codespeicher (9) nach eigener Wahl abgespeicherten Codes in einen ersten Zwischenspeicher (10) aufgehoben wird,
dadurch gekennzeichnet,
daß der Codespeicher (9) einen Löscheingang (L) aufweist, daß der Löscheingang (L) des Codespeichers (9) von einer Vergleichsschaltung (16) ansteuerbar ist, die mit einem Festspeicher (17) für einen werkseitig festgelegten Code und einem zweiten Zwischenspeicher (18) verbunden ist, und die nach Eingabe des werkseitig festgelegten Codes in den zweiten Zwischenspeicher (18) den frei gewählten Code im Codespeicher (9) löscht.

2. Codegeschütztes Autoradio nach Anspruch 1,
dadurch gekennzeichnet,
daß zwischen dem Löscheingang (L) des Codespeichers (9) und dem Ausgang der Vergleichsschaltung (16) eine Oderschaltung (19) zwischengeschaltet ist und der andere Eingang der Oderschaltung (19) mit einer Undschaltung (20) verbunden ist, deren Eingänge einerseits mit einer Löschtaste (21) verbunden und andererseits an den Ausgang der Vergleichsschaltung (12) für den Codespeicher (9) und den ersten Zwischenspeicher (10) angeschlossen sind.

## Claims

1. Code-protected car radio having a circuit arrangement for interrupting the apparatus function after the isolation of the on-board network, which interruption is not cancelled until a code, which is stored in a code memory (9) in accordance with the user's own selection, has been entered into a first buffer store (10), characterised in that the code memory (9) has a delete input (L), in that the delete input (L) of the code memory can be driven by a comparison circuit (16) which is connected to a read-only memory (17) for a code which is fixed at the factory and to a second buffer store (18), and which deletes the freely selected code in the code memory (9) after entering the code which is fixed at the factory into the second buffer store (18).

2. Code-protected car radio according to Claim 1, characterised in that an OR circuit (19) is connected inbetween the delete input (L) of the code memory (9) and the output of the comparison circuit (16), and the other input of the OR circuit (19) is connected to an AND circuit (20) whose inputs are connected on the one hand to a delete key (21), and on the other hand to the output of the comparison circuit (12) for the code memory (9) and to the first buffer store (10).

## Revendications

1. Autoradio protégé par code comportant un circuit pour couper le fonctionnement de l'appareil après séparation de l'autoradio du tableau de bord, et qui seulement après introduction d'un code choisi librement, enregistré dans une mémoire de code (9) soit supprimé dans une première mémoire intermédiaire (10), autoradio caractérisé en ce que,
La mémoire de code (9) comporte une entrée d'effacement (L), cette entrée d'effacement (L) de la mémoire de code (9) pouvant être commandée par un circuit de comparaison (16) qui est relié à une mémoire fixe (17) pour le code fixé en atelier et une seconde mémoire intermédiaire (18) et qui, après introduction du code fixé en atelier dans la mémoire intermédiaire (18), efface le code choisi librement dans la mémoire de code (9).

2. Autoradio protégé par code selon la revendication 1, caractérisé en ce qu'entre l'entrée d'effacement (L) de la mémoire de code (9) et la sortie du circuit de comparaison (16), il est prévu une porte (OU 19) et l'autre entrée de la porte (OU 19) est reliée à une porte (ET 20) dont les entrée sont reliées d'une part à une touche d'effacement (21) et d'autre part, à la sortie du circuit de comparaison (12) pour la mémoire de code (9) et la première mémoire intermédiaire (10).
